# FASCICULE DE BREVET EUROPEEN

(11) **EP 2 794 177 B1**
(45) Date de publication et mention de la délivrance du brevet: **01.11.2017**
(21) Numéro de dépôt: 12801588.0
(22) Date de dépôt: 14.12.2012
(51) Int. Cl.: B23K 20/02, B23K 20/16, B23K 20/227

(54) **PROCEDE D'ASSEMBLAGE PAR SOUDAGE DIFFUSION D'UNE PIECE EN ACIER A FORTE TENEUR EN CARBONE AVEC UNE PIECE EN ACIER OU EN ALLIAGE DE NICKEL A FAIBLE TENEUR EN CARBONE ; ASSEMBLAGE CORRESPONDANT**
VERFAHREN ZUM VERBINDEN EINES TEILS AUS STAHL MIT HOHEM KOHLENSTOFFGEHALT MIT EINEM TEIL AUS STAHL ODER EINER NICKELLEGIERUNG MIT NIEDRIGEM KOHLENSTOFFGEHALT DURCH DIFFUSIONSSCHWEISSEN: ENTSPRECHENDE ANORDNUNG
PROCESS FOR JOINING BY DIFFUSION WELDING A PART MADE OF A STEEL HAVING A HIGH CARBON CONTENT WITH A PART MADE OF A STEEL OR NICKEL ALLOY HAVING A LOW CARBON CONTENT: CORRESPONDING ASSEMBLY

(30) Priorité: 23.12.2011 FR 1162395
(43) Date de publication de la demande: 29.10.2014
(73) Titulaire: Commissariat à l'Énergie Atomique et aux Énergies Alternatives, 75015 Paris (FR)
(72) Inventeur: RIGAL, Emmanuel, F-38360 Sassenage (FR); CHU, Isabelle, F-38120 Fontanil Cornillon (FR)
(74) Mandataire: Brevalex
(86) Numéro de dépôt international: PCT/EP2012/075559
(87) Numéro de publication internationale: WO 2013/092413

(56) Documents cités:
- BE-A1- 773 482
- US-A- 4 703 885
- US-A- 4 745 037
- US-A1- 2010 028 705

## Description

### DOMAINE TECHNIQUE

La présente invention concerne un procédé d'assemblage par soudage diffusion d'une pièce en acier à forte teneur en carbone avec une pièce en acier ou en alliage de nickel à faible teneur en carbone conformément au préambule de la revendication 1 (voir, par exemple, US2010/0028705 A1) et un assemblage de tels matériaux à l'aide de ce matériau intercalaire (voir revendication 14). Plus précisément, l'invention a trait à un procédé d'assemblage par soudage diffusion d'une pièce en acier à forte teneur en carbone et à faible teneur en éléments carburigènes avec une pièce en acier ou en alliage de nickel à faible teneur en carbone et à forte teneur en éléments carburigènes, dans lequel un matériau intercalaire est placé entre les pièces.

L'invention concerne également l'assemblage ainsi obtenu.

Le domaine technique de l'invention peut être défini de manière générale comme étant le soudage diffusion, et en particulier le soudage diffusion de deux pièces en alliages métalliques différents entre lesquels le carbone peut diffuser.

### ÉTAT DE LA TECHNIQUE ANTÉRIEURE

Il est connu que lors du soudage par diffusion sans matériau intercalaire entre un acier comportant une forte teneur en carbone et une faible teneur totale en éléments carburigènes d'une part, et un acier ou un alliage de nickel comportant une forte teneur en éléments carburigènes et une faible teneur en carbone d'autre part, des jonctions peu satisfaisantes sont obtenues.

En effet, la diffusion du carbone du premier vers le second matériau provoque une carburation qui fragilise ce second matériau et affaiblit le premier.

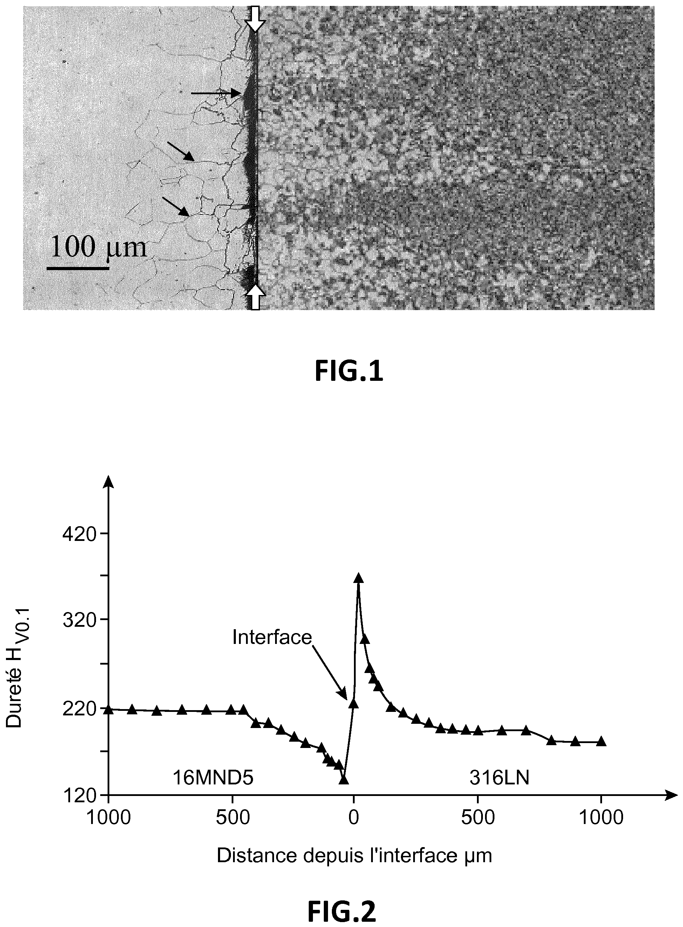

La Figure 1 montre la microstructure d'un assemblage soudé par diffusion entre un acier faiblement allié 16MND5 (Fe-0,17%C-1,31%Mn-0,18%Cr-0,74%Ni-0,5%Mo) (à droite sur la Figure 1) et un acier austénitique inoxydable 316LN (Fe-0,022%C-17,5%Cr-12,2%Ni-2,4%Mo-0,07%N) (à gauche sur la Figure 1) (précisons que dans la présente, toutes les compositions sont données en % massiques) [1].

L'interface entre l'acier faiblement allié et l'acier martensitique inoxydable est indiquée par les flèches blanches sur la Figure 1.

La décarburation de l'acier faiblement allié se traduit par l'apparition de grains blancs de ferrite. La carburation de l'acier austénitique inoxydable se traduit par l'apparition de carbures indiqués par les flèches noires sur la Figure 1.

La Figure 2 montre la variation de la concentration en carbone au-travers de cet assemblage. Sur cette figure, les phénomènes de carburation/décarburation apparaissent clairement.

Le même type de microstructure est obtenue par Enjo dans le cas d'un soudage diffusion entre un acier au carbone S45C (Fe-0,47%C) et un acier austénitique inoxydable SUS304 (Fe-0,05%C-18,5%Cr-8,1%Ni) [2] ainsi que par Kurt dans le cas d'assemblages soudés diffusés entre un acier faiblement allié AlSI 4140 (Fe-0,42%C-0,72%Mn-0,87%Cr-0.19%Mo) et soit un acier duplex inoxydable (Fe-0,024%C-24,5%Cr-4,23%Ni-0,83%Mo), soit un acier austénitique 304 (Fe-0,052%C-19,2%Cr-8,5%Ni) [3].

Pour évaluer la fragilité de l'interface des assemblages soudés diffusés, on a fait appel à des essais de résilience réalisés à température ambiante à l'aide d'éprouvettes Charpy dans lesquelles l'entaille, en forme de V ou de U, est située en regard de l'interface.

En effet, ce test mécanique est beaucoup plus sensible à la fragilité de l'interface que l'essai de traction conventionnel. La résilience de l'assemblage du document [1] est de 70J environ contre 310J pour l'acier austénitique inoxydable et 214J pour l'acier faiblement allié.

L'assemblage est donc nettement moins résistant que les matériaux le constituant, à cause des phénomènes de carburation/décarburation. Dans le cas, très similaire à celui du document [1], d'un assemblage soudé-diffusé entre un acier faiblement allié A508 (Fe-0,19%C-1,52%Mn-0,18%Cr-0,55%Ni-0,49%Mo) et un acier austénitique inoxydable 316L (Fe-0,03%C-18,0%Cr-12,0%Ni-2,52%Mo), Besson [4] obtient une rupture fragile localisée à l'interface, avec des éprouvettes Charpy V de taille réduite, bien que cette fois l'entaille ne soit pas usinée en regard de l'interface mais à 1 mm de celle-ci, ce qui est pourtant moins favorable à une ouverture de l'interface.

Dans le cas de matériaux obtenus par compaction d'un mélange de poudres d'acier 10CrMo9-10 (typiquement Fe-0,10%C-2,25%Cr-1%Mo) et d'acier AlSI316 (typiquement Fe-<0,08%C-17,0%Cr-12,0%Ni-2,5%Mo) dans une proportion variant de 3 pour 7 à 8 pour 2, Prader obtient des valeurs de résilience KCV allant de 70 à 110J, soit 55% à 70% de celles des aciers de base seulement [5]. Des valeurs plus proches de 100% ne sont atteintes que pour des mélanges moins dilués. On voit donc que la résilience du matériau dépend de la densité d'interfaces 10CrMo9-10 / AlSI316 car celles-ci sont fragiles, comme dans le cas des joints soudés diffusés.

Par ailleurs, l'utilisation d'un matériau intercalaire pour faciliter le soudage diffusion entre deux matériaux est connue [6]. Une solution possible pour empêcher la diffusion du carbone est donc d'intercaler entre les deux matériaux à souder un matériau intercalaire jouant un rôle de barrière.

De façon évidente, ce matériau intercalaire ne doit pas former lui-même de carbures. Buchkremer [7] rapporte que l'assemblage entre un acier P92 (typiquement Fe-0,1%C-9%Cr-2%W) et un acier 1,4910 (typiquement Fe-0,02%C-17%Cr-13%Ni-3%Mo-N) présente des propriétés mécaniques moins bonnes quand un matériau intercalaire en Ni-16%Cr-15%Mo (Hastelloy S) est utilisé, que lorsque l'assemblage est réalisé sans matériau intercalaire. En effet, dans le premier cas, le matériau intercalaire Ni-16%Cr-15%Mo est fortement carburé lors de l'assemblage.

Le matériau intercalaire ne doit pas non plus former avec les matériaux à assembler des composés fragiles tels que par exemple des intermétalliques, ou encore être fragile lui-même. Un tel matériau intercalaire peut donc être un métal sensiblement pur tel que du cuivre, du nickel ou de l'argent dont l'utilisation en soudage diffusion est connue [6].

En général, l'utilisation d'un matériau intercalaire est efficace pour maîtriser les phénomènes de diffusion au voisinage des interfaces mais elle ne permet pas toujours d'améliorer les propriétés mécaniques des assemblages car le matériau intercalaire est souvent moins résistant que les deux matériaux à assembler. Dans le cas de l'essai de traction, cette faiblesse du matériau intercalaire peut être, en apparence, compensée par le choix d'une épaisseur d'intercalaire fine (mais néanmoins suffisante pour résoudre le problème lié à la diffusion) : le confinement favorise une rupture à une contrainte apparente supérieure à la résistance mécanique de l'intercalaire comme le montre Klassen [8], voire une rupture en dehors de l'interface.

Atkinson, dans le cas d'un assemblage entre un acier au manganèse Fe-12,5%Mn-1,23%C et un acier faiblement allié Fe-0,45%C-1,3%Cr-0,3%Mo-4,0%Ni, cherche à limiter l'épaisseur de nickel pur utilisé comme intercalaire, afin de ne pas trop nuire à la résistance de l'assemblage [9]. Dans le cas de l'essai de résilience, on place l'entaille à mi-épaisseur de l'intercalaire. Le confinement obtenu par un intercalaire mince n'améliore pas la résilience.

Il ressort de ce qui précède que le problème de l'assemblage par soudage diffusion entre un acier comportant une forte teneur en carbone et une faible teneur totale en éléments carburigènes d'une part, et un acier ou un alliage de nickel comportant une forte teneur en éléments carburigènes et une faible teneur en carbone d'autre part, n'a reçu jusqu'alors aucune solution pleinement satisfaisante.

Il existe donc un besoin pour un procédé d'assemblage par soudage diffusion d'une pièce en acier à forte teneur en carbone et à faible teneur en éléments carburigènes avec une pièce en acier ou en alliage de nickel à faible teneur en carbone et à forte teneur en éléments carburigènes, mettant en oeuvre un matériau intercalaire, qui permette d'obtenir un assemblage mécaniquement résistant avec des valeurs de résilience élevées et en tout cas plus élevées que celles obtenues dans l'art antérieur tel que décrit plus haut.

Il existe aussi un besoin pour un tel procédé qui ne cause pas de dégradation ni des interfaces entre le matériau intercalaire et les pièces, ni des pièces à assembler.

Il faut donc que le matériau intercalaire supprime la fragilisation des matériaux des pièces du fait de la diffusion du carbone mais permette aussi d'obtenir un assemblage résistant et cela même pour un matériau intercalaire épais.

Précisons que, par matériau intercalaire épais, on entend généralement un matériau d'épaisseur supérieure à celle strictement nécessaire pour éviter la carburation de l'acier ou alliage de nickel à faible teneur en carbone et à forte teneur en éléments carburigènes, par exemple d'épaisseur supérieure à 0,3 mm.

Pour que l'assemblage soit aussi résistant que possible (l'assemblage peut être au maximum aussi résistant que le moins résistant des deux matériaux de base qui constituent les deux pièces à assembler), il faut :
- que la ou les interface(s) soit (soient) résistantes, on sait que ce n'est pas le cas pour l'assemblage direct à cause de la carburation ;
- que le matériau intercalaire non seulement présente des interfaces résistantes avec chacun des deux matériaux de base des pièces, mais qu'il soit lui-même plus résistant que le moins résistant des deux matériaux de base, sinon ce sera toujours un point faible.

Le but de la présente invention est de fournir un procédé d'assemblage par soudage diffusion d'une pièce en acier à forte teneur en carbone et à faible teneur en éléments carburigènes avec une pièce en acier ou en alliage de nickel à faible teneur en carbone et à forte teneur en éléments carburigènes, qui satisfait entre autres à l'ensemble des besoins, exigences, et critères mentionnés plus haut.

Le but de la présente invention est encore de fournir un procédé d'assemblage par soudage diffusion d'une pièce en acier à forte teneur en carbone et à faible teneur en éléments carburigènes avec une pièce en acier ou en alliage de nickel à faible teneur en carbone et à forte teneur en éléments carburigènes qui ne présente pas les inconvénients, défauts, limitations et désavantages des procédés de l'art antérieur décrits plus haut, et qui résolve les problèmes des procédés de l'art antérieur.

### EXPOSÉ DE L'INVENTION

Ce but, et d'autres encore, sont atteints, conformément à l'invention par un procédé d'assemblage par soudage diffusion d'une pièce en acier à forte teneur en carbone et à faible teneur en éléments carburigènes avec une pièce en acier ou en alliage de nickel à faible teneur en carbone et à forte teneur en éléments carburigènes tel que défini dans la revendication 1, où chacune des pièces comprenant une surface à assembler, dans lequel on place un matériau intercalaire entre les surfaces à assembler, puis on réalise le soudage diffusion pour assembler les deux pièces, et on refroidit l'assemblage obtenu, où le matériau intercalaire est un alliage à matrice de nickel et éventuellement de fer et/ou de cobalt présentant une microstructure austénitique à la température de soudage diffusion et comprenant, outre des impuretés inévitables, les éléments suivants dans les teneurs suivantes exprimées en % massiques par rapport à la masse totale de l'alliage :
- Nickel (Ni) : 5 à 90, de préférence 35 à 75 ;
- Cobalt (Co) : 0 à 50, de préférence 0 à 20 ;
- Fer (Fe) : 0 à 93, de préférence 23 à 63 ;
- Molybdène : 4 à 16 ;
- Carbone : moins de 0,1, de préférence moins de 0,05 ;
- Chrome : Moins de 10, de préférence moins de 5, de préférence encore moins de 1;
- Eléments d'alliages habituellement utilisés dans les alliages austénitiques, pour chacun d'eux : moins de 2, de préférence moins de 1, de préférence encore moins de 0,5.

Les termes « impuretés inévitables », ou « impuretés accidentelles » ont une signification connue de l'homme du métier et sont largement utilisés et acceptés dans ce domaine de la technique.

Des exemples de telles impuretés inévitables sont le soufre (S), le phosphore (P), le cuivre (Cu), les métaux alcalins, et les métaux alcalino-terreux.

Le procédé selon l'invention est fondamentalement défini par l'utilisation, en tant que matériau intercalaire de l'alliage spécifique plus haut.

L'utilisation de l'alliage spécifique tel qu'il a été défini plus haut, comme matériau intercalaire pour l'assemblage de deux pièces chacune en un matériau spécifique, à savoir d'une part une pièce en acier à forte teneur en carbone et à faible teneur en éléments carburigènes, et d'autre part une pièce en acier ou en alliage de nickel à faible teneur en carbone et à forte teneur en éléments carburigènes, n'est ni décrite ni suggérée dans l'art antérieur tel que représenté notamment par les documents cités plus haut.

Une telle utilisation est totalement inattendue, notamment en vertu du caractère imprévisible du comportement d'un matériau en tant qu'intercalaire entre deux métaux ou alliages spécifiques.

Le procédé selon l'invention dans lequel le matériau intercalaire est constitué de manière surprenante par l'alliage spécifique décrit plus haut satisfait entre autres à l'ensemble des exigences et critères mentionnés plus haut, ne présente pas les inconvénients des procédés de l'art antérieur et permet de préparer des jonctions (joints ou liaisons) et assemblages répondant également aux exigences précitées.

L'alliage du matériau intercalaire selon l'invention peut être défini comme un alliage à base de nickel et éventuellement de cobalt et/ou de fer enrichi en molybdène.

Il s'est avéré en effet de manière surprenante que la présence de molybdène dans l'alliage qui constitue le matériau intercalaire conduisait à une amélioration des propriétés mécaniques du matériau intercalaire par rapport aux matériaux intercalaires de l'art antérieur, sans pour autant que le matériau intercalaire ne soit carburé par la diffusion du carbone lors de l'opération de soudage diffusion (voir les exemples et notamment l'exemple 4).

Il est surprenant que l'incorporation de molybdène dans l'intercalaire permette de durcir la matrice austénitique du matériau intercalaire sans pour cela être carburé par la diffusion.

En effet, on sait que le molybdène affine la taille de grains des alliages austénitiques, mais on sait aussi que le molybdène forme des carbures.

On aurait donc dû s'attendre, en incorporant du molybdène dans l'alliage qui constitue le matériau intercalaire, à ce que les propriétés mécaniques du matériau intercalaire soient dégradées par rapport à un matériau ne contenant pas de molybdène. Or c'est le contraire qui est observé dans le matériau intercalaire selon l'invention.

L'invention va donc à l'encontre d'un préjugé répandu dans ce domaine de la technique et triomphe de ce préjugé.

En outre, le molybdène est présent dans l'alliage qui constitue le matériau intercalaire mis en oeuvre selon l'invention dans une teneur spécifique.

La teneur en molybdène de l'alliage qui constitue le matériau intercalaire doit être suffisante pour que les propriétés mécaniques du matériau intercalaire soient sensiblement égales ou supérieures à celles du matériau le moins résistant parmi les deux matériaux à assembler. En effet, l'effet durcissant de Mo dépend bien évidemment de la teneur en Mo.

En conséquence, il a été déterminé, selon l'invention, que la teneur en Mo devait être de 2% à 25% en masse, de préférence de 4% à 16%.

Il s'est avéré que l'effet durcissant du molybdène était optimal dans cette plage préférée.

En effet en-deçà de 2% de Mo, l'effet durcissant dû au molybdène est trop faible pour être utile, autrement dit on ne trouverait pas de cas d'assemblage dans lequel un matériau intercalaire contenant moins de 2% de molybdène pourrait être plus résistant que le moins résistant des deux matériaux de base, car il faudrait alors que le moins résistant des deux matériaux de base soit vraiment tendre.

Au-delà de 25% de Mo, il est bien connu que Mo provoque la précipitation de phases intermétalliques fragiles et donc le matériau intercalaire deviendrait lui aussi fragile, tout en restant dur.

Le matériau intercalaire est un alliage à matrice de nickel et éventuellement de Fer et/ou de cobalt qui présente une microstructure austénitique, c'est-à-dire une structure cristalline cubique à faces centrées, à la température d'assemblage, par exemple à une température au-delà de 800°C.

Dans la présente, on entend par température d'assemblage la température à laquelle est réalisé le soudage diffusion et on emploie indifféremment les termes température d'assemblage et température de soudage-diffusion.

Cet alliage contient donc, outre des impuretés inévitables, les éléments suivants qui sont les éléments constitutifs de la matrice dans les teneurs spécifiques suivantes exprimées en % massiques :
- Nickel (Ni) : 5 à 90, de préférence 35 à 75 ;
- Cobalt (Co) : 0 à 50, de préférence de 0 à 20 ;
- Fer (Fe) : 0 à 93, de préférence 23 à 63.

On notera donc que le nickel est toujours présent car cet élément assure que la matrice présente la microstructure austénitique voulue.

La teneur en Ni est telle que définie plus haut, elle garantit que l'alliage du matériau intercalaire mis en oeuvre selon l'invention soit austénitique à la température d'assemblage ou soudage-diffusion qui se situe au-delà de 800°C.

Par contre, le cobalt et le fer ne sont pas obligatoirement présents.

L'alliage du matériau intercalaire mis en oeuvre selon l'invention peut donc être un alliage Nickel-Cobalt, ou un alliage Nickel-Fer, ou un alliage Nickel-fer-Cobalt, ces alliages étant enrichis en molybdène.

L'alliage du matériau intercalaire selon l'invention peut être simplement un alliage Ni-Mo.

Les alliages sans cobalt sont intéressants pour des raisons de coût et pour des raisons d'activation neutronique dans les applications nucléaires.

L'alliage du matériau intercalaire présente en outre une teneur en carbone suffisamment faible pour ne pas sensiblement carburer l'acier ou l'alliage de nickel ayant une forte teneur en éléments carburigènes et une faible teneur en carbone.

La teneur en carbone de l'alliage du matériau intercalaire est donc inférieure à 0,10% en masse, de préférence inférieure à 0,05% en masse.

En outre, l'alliage du matériau intercalaire présente une teneur en chrome (Cr) suffisamment faible pour ne pas être carburé par l'acier ayant une forte teneur en carbone.

Sa teneur en chrome est inférieure à 10% en masse, de préférence inférieure à 5%, de préférence encore inférieure à 1%.

L'alliage du matériau selon l'invention peut éventuellement comprendre un ou plusieurs élément(s) d'alliage habituellement utilisé(s) dans les alliages austénitiques.

Ces éléments d'alliage, leur rôle et leurs teneurs sont connus de l'homme du métier dans ce domaine de la technique.

Ces éléments d'alliage jouent principalement un rôle lors de l'élaboration de l'alliage pour piéger certaines impuretés, et n'influencent pas sensiblement les propriétés, notamment les propriétés mécaniques de l'alliage final.

La teneur de ce(s) élément(s) d'alliage, lorsqu'ils sont présents est pour chacun d'eux de moins de 2% en masse, de préférence de moins de 1%, de préférence encore de moins de 0,5%.

Avantageusement, l'alliage du matériau intercalaire comprend un ou plusieurs parmi les éléments d'alliage suivants habituellement utilisés dans les alliages austénitiques dans les teneurs suivantes, exprimées en % massiques par rapport à la masse totale de l'alliage:
- Manganèse (Mn) : moins de 2 ;
- Silicium (Si) : moins de 1 ;
- Calcium (Ca) : moins de 0,5, de préférence moins de 0,1 ;
- Aluminium (Al) : moins de 1, de préférence moins de 0,5.

Le manganèse permet de piéger le soufre et le silicium et l'aluminium permettent de piéger l'oxygène résiduel.

Le calcium piège l'oxygène et le soufre.

Un alliage du matériau intercalaire préféré est constitué, en % massiques par rapport à la masse totale de l'alliage, de :
- Nickel : 35% à 55%, par exemple 45,3%;
- Cobalt : 0 à 18%, par exemple 9,97%;
- Molybdène : 4 à 8%, par exemple 5,19% ;
- et le reste de fer et d'impuretés inévitables.

Généralement, l'acier à forte teneur en carbone et à faible teneur en éléments carburigènes peut comprendre plus de 0,08% en masse de carbone et moins de 15% en masse d'éléments carburigènes, de préférence parmi ces éléments carburigènes moins de 12% de chrome, et l'acier ou l'alliage de nickel à faible teneur en carbone et à forte teneur en éléments carburigènes comprend 0,08% en masse ou moins de carbone et 15% en masse ou plus d'éléments carburigènes.

Généralement, les éléments carburigènes peuvent être choisis parmi les éléments des colonnes IVB tels que Ti, Zr, et Hf, VB tels que V, Nb, et Ta, et VIB tels que Cr, Mo, et W, de la classification périodique des éléments.

Avantageusement, l'acier à forte teneur en carbone et à faible teneur en éléments carburigènes peut être choisi dans la classe des aciers au carbone tels que les aciers de construction, ou dans la classe des aciers faiblement alliés tels que les aciers pour appareils à pression ou les aciers à outils.

Avantageusement, l'acier ou l'alliage de nickel à faible teneur en carbone et à forte teneur en éléments carburigènes peut être choisi parmi les aciers inoxydables tels que les aciers austénitiques de la série 300 et l'alliage 800 ou parmi les alliages de nickel tels que les alliages de type Inconel®, Haynes®, ou Hastelloy®.

Avantageusement, au moins une des pièces à assembler peut être sous forme de poudre.

Autrement dit, l'acier à forte teneur en carbone et à faible teneur en éléments carburigènes et l'acier ou l'alliage de nickel à faible teneur en carbone et à forte teneur en éléments carburigènes peuvent se présenter, l'un ou l'autre ou les deux, sous forme solide ou sous forme de poudre.

Le matériau intercalaire peut être placé entre les surfaces à assembler sous la forme d'une feuille ou d'une tôle, par exemple d'une épaisseur de 0,1 mm à 3 mm, ou encore d'une poudre, de préférence d'une couche de poudre, par exemple d'une épaisseur de 0,3 à 10 mm, de préférence de 1 mm à 5 mm, de préférence encore de 1 à 3 mm, mieux de 1 à 2 mm. Ou bien, le matériau intercalaire est déposé sous la forme d'un revêtement, par exemple d'une épaisseur de 0,1 à 3 mm, sur au moins l'une des surfaces à assembler.

Dans ce cas, le matériau intercalaire peut être déposé par un procédé choisi parmi la projection thermique de poudre, la fusion de fil, le dépôt par voie chimique ou électrolytique, et le dépôt sous vide.

Le soudage diffusion peut être réalisé par compression isostatique à chaud (CIC) ou par compression uniaxiale.

Lorsqu'un ou plusieurs des matériaux se trouvent sous forme de poudre, une compaction de (des) poudre(s) est effectuée pendant le soudage diffusion.

Avantageusement, l'assemblage obtenu peut être soumis, en outre, à un ou plusieurs traitement(s) thermique(s).

Ce(s) traitement(s) thermique(s) peut (peuvent) être choisi(s) parmi les traitements de chauffage (recuit), trempe, et revenu.

L'invention concerne en outre l'assemblage obtenu par le procédé selon l'invention tel qu'il a été décrit plus haut, voir la revendication 14. Cet assemblage possède intrinsèquement, de manière inhérente tous les avantages déjà énumérés plus haut, liés notamment à la mise en oeuvre dans le procédé d'assemblage d'un matériau intercalaire spécifique.

D'autres caractéristiques et avantages de l'invention ressortiront mieux à la lecture de la description qui va suivre, donnée à titre illustratif et non limitatif en référence aux dessins joints.

### BRÈVE DESCRIPTION DES DESSINS

- La Figure 1 est une micrographie, prise au microscope optique qui montre la microstructure d'un joint soudé-diffusé entre un acier faiblement allié 16MND5 (à droite), et un acier austénitique inoxydable 316LN (à gauche). L'interface est indiquée par des flèches blanches, et les carbures sont indiqués par des flèches noires. L'échelle portée sur la Figure 1 représente 100 µm.
- La Figure 2 est un graphique qui montre la variation de la concentration en carbone au travers de l'interface dans l'assemblage de la Figure 1.

En abscisse est portée la distance depuis l'interface, en µm, et en ordonnée est portée la dureté H_{v0,1}. L'interface est à l'abscisse zéro.

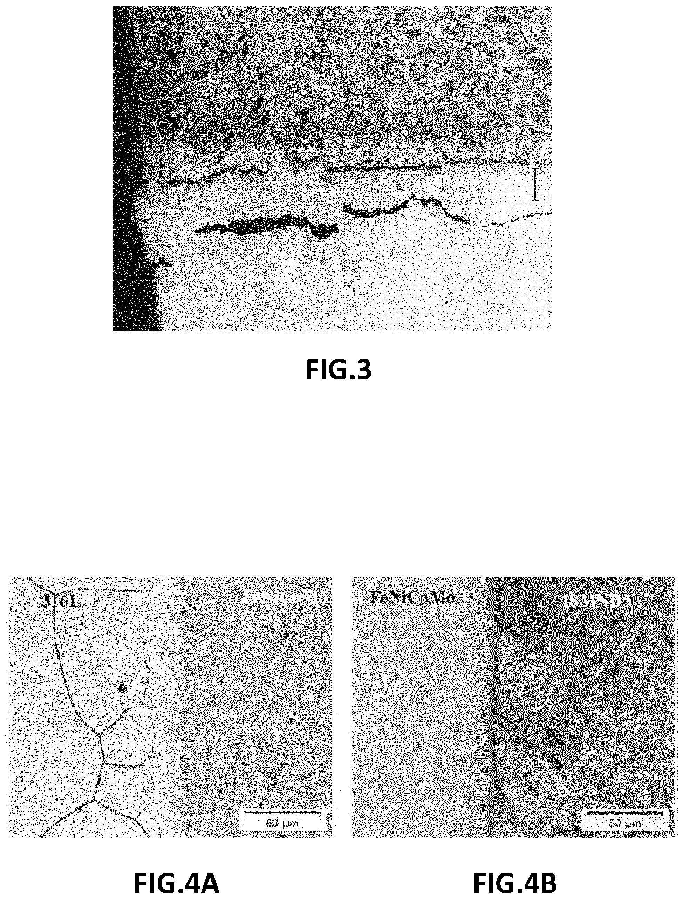

- La Figure 3 est une micrographie, prise au microscope optique qui montre l'endommagement de l'alliage de nickel IN690 dans la zone carburée de cet alliage après un essai de traction réalisé sur l'assemblage d'un acier 16MND5 (en haut) et d'un alliage de nickel IN690 (en bas) obtenu par soudage diffusion en Compression Isostatique à Chaud dans l'exemple 1.

L'échelle portée sur la Figure 3 représente 25 µm.
- Les Figures 4A et 4B sont des micrographies, prises au microscope optique qui montrent la microstructure de l'interface 316L/FeNiCoMo (Figure 4A) et de l'interface FeNiCoMo/18MND5 (Figure 4B) dans le cas d'un assemblage 316L/FeNiCoMo/18MND5 obtenu dans l'exemple 4 par soudage diffusion en Compression Isostatique à Chaud pendant 4h à 1100°C sous 1200 bar.

L'échelle portée sur les Figures 4A et 4B représente 50 µm.

### EXPOSÉ DÉTAILLÉ DE MODES DE RÉALISATION PARTICULIERS

Le procédé de l'invention consiste donc à assembler par soudage diffusion une pièce en acier à forte teneur en carbone et à faible teneur en éléments carburigènes avec une pièce en acier ou en alliage de nickel à faible teneur en carbone et à forte teneur en éléments carburigènes.

Il est bien évident que pour des raisons de commodités, on décrit le cas de l'assemblage de deux pièces mais le nombre des pièces à assembler peut être supérieur à 2, on peut ainsi assembler simultanément un plus grand nombre de pièces.

Par « pièce », on entend généralement tout élément, ou entité de forme quelconque entrant par exemple, après assemblage simultané ou non avec une ou plusieurs autres pièces, dans des structures de plus grande dimension.

Il n'existe aucune limitation sur la géométrie, la forme, et la taille des pièces assemblées par le procédé selon l'invention. En particulier, le procédé selon l'invention peut être mis en oeuvre avec des pièces qui présentent des géométries, formes, complexes, compliquées notamment qui présentent des surfaces à assembler, interfaces de formes complexes, compliquées.

L'acier à forte teneur en carbone et à faible teneur en éléments carburigènes, et l'acier ou l'alliage de nickel à faible teneur en carbone et à forte teneur en éléments carburigènes, ainsi que le matériau intercalaire, ont déjà été définis en détail plus haut.

Le procédé selon l'invention comprend généralement les étapes habituelles mises en oeuvre dans un procédé de soudage-diffusion.

Ainsi, le procédé selon l'invention peut comprendre les étapes suivantes :
- nettoyage des surfaces des pièces à assembler et éventuellement du matériau intercalaire ;
- mise en place des pièces à assembler et du matériau intercalaire (on peut dire que les pièces et le matériau intercalaire sont empilés) par exemple dans un conteneur;
- les pièces et le matériau intercalaire sont soumis simultanément à un cycle de chauffage et de compression afin de réaliser le soudage-diffusion ;
   Ce cycle de chauffage et de compression peut être réalisé par compression (compaction) isostatique à chaud à l'aide d'une presse isostatique à chaud ou par pressage, compression uniaxiale à chaud à l'aide d'un système de pressage, compression uniaxiale à chaud équipé d'un four;
- l'assemblage obtenu est refroidi ;
- l'assemblage est déchargé, par exemple on procède à l'ouverture du conteneur éventuel ;
- éventuellement l'assemblage obtenu est soumis à un ou plusieurs traitement(s) thermique(s) destiné(s) notamment à restaurer les propriétés initiales des matériaux.

Ainsi, le procédé selon l'invention comprend tout d'abord de préférence le nettoyage des deux surfaces des pièces à assembler. Le nettoyage permet notamment d'éliminer les impuretés susceptibles de gêner la diffusion.

Il est mis en oeuvre selon des techniques connues de l'homme du métier et concerne l'ensemble des pièces à assembler, intercalaire compris quand il est sous forme de feuille, tôle ou revêtement. Quand il est sous forme de poudre, sa propreté est assurée par des conditions de stockage adaptées.

Le nettoyage pourra être réalisé par exemple par les techniques décrites dans le document FR-A1-2 758 752 ou dans le document FR-A1-2 779 983, à la description desquels on pourra se référer et en adaptant éventuellement ces techniques aux particularités des pièces à assembler et de l'intercalaire qui sont mis en oeuvre dans le procédé selon l'invention.

L'étape suivante est la mise en place ou positionnement des pièces à assembler et du matériau intercalaire par exemple dans un conteneur aussi appelé gaine ou enveloppe.

On peut dire que les pièces et le matériau intercalaire sont positionnés, mis en place selon un empilement souhaité, le matériau intercalaire étant disposé entre les surfaces à assembler des pièces à assembler.

Lorsque l'intercalaire est sous forme de revêtement, le revêtement est réalisé sur la surface de l'une quelconque des pièces à assembler ou sur les surfaces des deux pièces à assembler et la zone sur laquelle est effectué le revêtement comprend respectivement au moins la surface à assembler de l'une des pièces à assembler ou les surfaces à assembler des deux pièces à assembler.

En réalisant l'apport en matériau intercalaire sous la forme d'un revêtement sur au moins une des surfaces à assembler des pièces à assembler, de préférence par un procédé de projection thermique, il est possible d'assembler des pièces avec des interfaces de formes, géométries complexes, compliquées alors qu'il est difficile et coûteux de former une feuille ou tôle selon une géométrie compliquée.

Dans le cas où l'intercalaire est sous forme de poudre, celle-ci peut être disposée en une couche sur la surface d'une des pièces à assembler puis la deuxième pièce à assembler disposée sur la poudre. Alternativement, un logement est ménagé entre les pièces à assembler puis ce logement est rempli de poudre par un orifice.

Dans le cas où une des pièces à assembler est sous forme de poudre tandis que l'autre est sous forme solide (massive), la mise en place des pièces à assembler et du matériau intercalaire consiste à réaliser un empilement en séparant la pièce sous forme de poudre de la pièce sous forme solide par l'intercalaire. Par exemple, la pièce sous forme de poudre peut être disposée dans un conteneur, recouverte de l'intercalaire puis la pièce sous forme solide (massive) disposée dessus.

Dans le cas où les deux pièces à assembler sont sous forme de poudre, l'intercalaire est généralement sous forme de feuille ou de tôle et sépare les deux pièces sous forme de poudres disposées dans un conteneur.

Les pièces et le matériau intercalaire mis en place, empilés, sont ensuite soumis simultanément à un cycle de chauffage et de compression afin de réaliser le soudage-diffusion, éventuellement accompagné d'une compaction de poudre comme expliqué plus haut

Selon l'invention, le soudage-diffusion est par définition, réalisé par un traitement à une pression et à une température suffisantes, pendant une durée suffisante, pour former un assemblage, une liaison résistante.

Cette température est généralement de 800°C à 1200°C, de préférence de 950°C à 1150°C, par exemple de 1100°C, et cette pression est généralement de 5 à 200 MPa, de préférence de 50 à 150MPa, par exemple de 100MPa.

La durée pendant laquelle on maintient cette température et cette pression sera généralement de 0,5 à 10 heures, de préférence de 1 à 5 heures, par exemple environ 4 heures.

Le cycle de chauffage et de compression peut comporter plusieurs phases réalisées à des températures, à des pressions et avec des durées différentes.

Le soudage diffusion peut être effectué par exemple par pressage uniaxial à chaud (compression uniaxiale à chaud), ou par compression isostatique à chaud (CIC), cette dernière technique étant préférée.

En effet, la compression isostatique à chaud permet notamment d'assembler des pièces de formes complexes et de grandes tailles, par exemple dont la masse peut atteindre plusieurs tonnes. Selon l'invention, lorsque le soudage diffusion est effectué par compression isostatique à chaud, les pièces et le matériau intercalaire mis en place peuvent être introduits dans une enveloppe, gaine ou conteneur, qui permet d'isoler les pièces à assembler de l'atmosphère et de mettre l'enveloppe sous vide pour l'assemblage des pièces par soudage diffusion dans celle-ci.

Bien évidemment, l'étape de mise en place des pièces et du matériau intercalaire peut aussi être réalisée directement dans l'enveloppe.

Cette enveloppe est réalisée de manière classique et connue de l'homme du métier, généralement par chaudronnerie.

Une fois l'enveloppe remplie, elle est dégazée et obturée selon des techniques connues de l'homme du métier.

Les pièces et le matériau intercalaire placés dans l'enveloppe dégazée peuvent ensuite être assemblés par soudage diffusion.

Le cycle de chauffage et de compression comprend généralement successivement :
- une montée en température et en pression, généralement depuis la température et la pression ambiantes, pour atteindre la température et la pression définies plus haut auxquelles est réalisé le soudage-diffusion ;
- un palier à ladite pression et à ladite température auxquelles est réalisé le soudage-diffusion pendant la durée définie plus haut ;
- une descente en température et en pression généralement jusqu'à la température et la pression ambiantes.

A titre d'exemple, on pourra réaliser le cycle de CIC suivant :
- Montée à 1050°C et 1200 bar (120 MPa) en 3 heures,
- Maintien à 1050°C et 1200 bar (120 MPa) pendant 2 heures,
- Descente à 20°C et 30 bar (3 Mpa) en 4 heures.

Enfin, à la suite de l'étape de soudage-diffusion par CIC, le produit obtenu c'est-à-dire l'assemblage de la pièce en acier à forte teneur en carbone et à faible teneur en éléments carburigènes avec une pièce en acier ou en alliage de nickel à faible teneur en carbone et à forte teneur en éléments carburigènes, comportant un joint réalisé à partir du matériau intercalaire, est généralement soumis à une opération de dégainage ou d'ouverture de l'enveloppe par exemple par usinage.

Selon l'invention, l'assemblage peut aussi être réalisé par pressage uniaxial à chaud (compression uniaxiale à chaud).

Les pièces à assembler et le matériau intercalaire peuvent être disposés dans une presse équipée d'un système de chauffage et d'une enceinte à vide.

Un vide de l'ordre de 10⁻¹ à 10⁻³ Pa environ peut alors être établi dans ladite enceinte.

Le pressage uniaxial à chaud peut être réalisé en appliquant une pression de 1 à 100 Mpa environ, par exemple de 5 à 30 MPa environ.

Le cycle de chauffage comprend généralement successivement :
- une montée en température, généralement depuis la température ambiante, pour atteindre la température à laquelle est réalisé le soudage-diffusion ;
- un palier à ladite température pendant une durée suffisante pour réaliser le soudage-diffusion;
- une descente en température généralement jusqu'à la température ambiante.

Les températures et durées de ce cycle peuvent être par exemple identiques à celles décrites pour la compression isostatique à chaud.

L'assemblage obtenu est ensuite retiré, déchargé de la presse.

Selon l'invention, l'assemblage obtenu peut être soumis en outre à un ou plusieurs traitement(s) thermique(s).

L'étape éventuelle de traitement thermique peut être réalisée avant ou après le dégainage. Ces traitements thermiques ont généralement pour but de restaurer les propriétés et les microstructures des matériaux des pièces assemblées. Ainsi, l'assemblage pourra subir un ou plusieurs traitement(s), généralement choisi(s) parmi les traitements recommandés pour les matériaux constitutifs de l'assemblage.

On pourra ainsi être amené à définir un compromis entre un traitement d'austénitisation, trempe et revenu de l'acier à forte teneur en carbone, et un traitement d'hypertrempe de l'acier ou de l'alliage de nickel à faible teneur en carbone.

L'assemblage selon l'invention est suffisamment résistant pour que les traitements de trempe et de revenu, n'endommagent pas l'assemblage formé.

Les assemblages de pièces préparés par le procédé selon l'invention trouvent leur application notamment pour remplacer le « beurrage inox » des composants des Réacteurs à Eau sous Pression (REP).

D'autres applications des assemblages selon l'invention sont les applications anticorrosion où l'on associe un matériau de structure de type acier au carbone et un matériau de surface de type acier inoxydable.

L'invention va maintenant être décrite en référence aux exemples suivants donnés à titre illustratif et non limitatif.

### Exemples :

### Exemple 1 (Comparatif)

On soude par diffusion en Compression Isostatique à Chaud pendant 1h à 1050°C et sous une pression de 1000 bar, deux disques d'un diamètre de 100 mm et d'une épaisseur de 50 mm, respectivement en acier 16MND5 (Fe-0,165%C-1,30%Mn-0,74%Ni-0,18%Cr-0,48%Mo) et en alliage de nickel IN690 (Ni-0,021%C-10,1%Fe-29,2%Cr-0,2%Ti-0,13%Al).

Après soudage diffusion, l'assemblage est chauffé à 900°C pendant 30 min, trempé à l'huile puis revenu 5h à 640°C de façon à restaurer la microstructure et les propriétés de l'acier 16MND5.

Des éprouvettes de traction et de résilience, ainsi que des échantillons de métallographie destinés à des analyses métallurgiques sont prélevés dans l'assemblage.

L'interface est observée au microscope optique.

Les éprouvettes de traction sont cylindriques et ont un fût de diamètre 4 mm et une longueur utile de 25 mm.

Les éprouvettes de résilience sont des barreaux à section carrée 10 mm X 10 mm et d'une longueur de 55 mm.

Les essais de résilience sont réalisés conformément à la norme EN ISO 148-1 d'octobre 2010 avec une entaille en U positionnée à l'interface.

Les résultats des essais de résilience et de traction sont portés dans le Tableau 1 ci-dessous.

Comme prévu, l'alliage de nickel est carburé.

La rupture en traction à 20°C et à 300°C a lieu soit dans le premier cas dans la zone de joint (de façon mixte à l'interface et dans la zone carburée de l'alliage de nickel), soit dans le second et meilleur des cas, dans l'alliage de nickel loin de l'interface. Dans le premier cas, la contrainte à rupture est inférieure à la résistance mécanique du matériau le moins résistant, l'alliage de nickel.

Dans le second cas, une observation microscopique après essai montre que l'alliage de nickel est endommagé au niveau de la zone carburée bien que la rupture se soit finalement produite loin de cette zone (Figure 3).

Les valeurs de résilience obtenues sont très faibles, de l'ordre de quelques Joules, plus exactement de 2 à 6 J. Cet assemblage est donc fragile.

### Exemple 2 (Comparatif)

On répète l'exemple 1 avec les mêmes pièces dans les mêmes matériaux, les mêmes conditions pour le soudage diffusion, et le même traitement après le soudage diffusion, à la seule différence que l'on dispose, avant le soudage par diffusion, un feuillard de nickel d'épaisseur 30 µm entre les deux disques en acier et en alliage de nickel.

Après soudage diffusion, l'analyse métallurgique montre que le nickel a bien joué le rôle de barrière de diffusion au carbone.

Cependant, on observe que l'assemblage rompt spontanément lors de la trempe, ce qui montre sa fragilité. L'utilisation de nickel en tant que matériau intercalaire n'est donc pas une bonne solution.

### Exemple 3 (Comparatif)

On soude par diffusion en Compression Isostatique à Chaud pendant 1h à 1100°C et sous une pression de 1000 bar deux disques d'un diamètre de 100 mm et d'une épaisseur de 50 mm, respectivement en un acier 16MND5 (Fe-0,165%C-1,30%Mn-0,74%Ni-0,18%Cr-0,48%Mo) et un acier austénitique 316LN (Fe-0,022%C-17,5%Cr-12,16%Ni-1,73%Mn-2,40%Mo).

On dispose, avant le soudage par diffusion, un feuillard de matériau intercalaire fer-nickel (Fe-42%Ni) d'épaisseur 1mm entre les deux matériaux.

Après soudage diffusion, l'assemblage est chauffé à 900°C, trempé à l'huile puis revenu 5h à 640°C de façon à restaurer la microstructure et les propriétés de l'acier 18MND5.

Des éprouvettes de traction et de résilience, ainsi que des échantillons de métallographie sont prélevés dans l'assemblage.

Les interfaces sont observées au microscope optique.

Les éprouvettes de traction sont cylindriques et ont un fût de diamètre 4 mm et une longueur utile de 25 mm.

Les éprouvettes de résilience sont des barreaux à section carrée 10mmX10mm et d'une longueur de 55 mm.

Les essais de résilience sont réalisés conformément à la norme EN ISO 148-1 d'octobre 2010 avec une entaille en U positionnée à mi-épaisseur du matériau intercalaire.

Les résultats des essais de résilience et de traction sont portés dans le Tableau 1 ci-dessous.

Comme dans l'exemple 2, l'analyse métallurgique montre que le feuillard de fer-nickel a bien joué le rôle de barrière de diffusion au carbone.

La rupture en traction a lieu soit dans le matériau intercalaire, soit à l'interface fer-nickel/316LN.

En résilience, l'énergie de rupture vaut de 40+/-3J, ce qui est une valeur largement inférieure à celle des matériaux de base de l'assemblage.

La rupture se produit essentiellement dans le matériau intercalaire qui constitue donc le point faible de l'assemblage.

### Exemple 4 (conforme à l'invention)

On soude par diffusion en Compression Isostatique à Chaud pendant 4h à 1100°C et sous une pression de 1200 bar deux disques d'un diamètre de 100 mm et d'une épaisseur de 50 mm, respectivement en un acier 18MND5 (Fe-0,18%C-1,51%Mn-0,22%Si-0,66%Ni-0,19%Cr-0,52%Mo) et un acier 316L (Fe-0,013%C-1,83%Mn-0,23%Si-10,24%Ni-16,89%Cr-2,04%Mo).

Entre ces deux disques est disposé, conformément à l'invention, un feuillard d'épaisseur 1 mm en un matériau intercalaire selon l'invention, qui est un alliage FeNiCoMo (Fe-45,3%Ni-9,97%Co-5,19%Mo.

Après soudage diffusion, l'assemblage est chauffé à 900°C, trempé à l'air soufflé puis revenu 5h à 650°C.

Des éprouvettes de traction et de résilience, ainsi que des échantillons de métallographie sont prélevés dans l'assemblage.

Les interfaces sont observées au microscope optique.

Les éprouvettes de traction sont cylindriques et ont un fût de diamètre 4 mm et une longueur utile de 25 mm.

Les éprouvettes de résilience sont des barreaux à section carrée 10mmX10mm et d'une longueur de 55 mm.

Les essais de résilience sont réalisés conformément à la norme EN ISO 148-1 d'octobre 2010 avec une entaille en V (plus sévère qu'une entaille en U) positionnée à mi-épaisseur du matériau intercalaire.

Les résultats des essais de résilience et de traction sont portés dans le Tableau 1 ci-dessous.

La Figure 4 montre qu'il n'y a pas de carburation de l'acier 316L (4A) ni de décarburation de l'acier 18MND5 (4B). Malgré le caractère carburigène du molybdène, le matériau FeNiCoMo n'est pas carburé.

Lors d'essais de traction à température ambiante, on n'observe une rupture ni aux interfaces ni dans le matériau intercalaire mais dans le 316L.

La résilience obtenue lorsque l'entaille est positionnée à mi-épaisseur du matériau intercalaire FeNiCoMo selon l'invention, soit 168J, reste inférieure à celle obtenue pour chacun des deux matériaux constitutifs de l'assemblage mais elle est très améliorée par rapport aux exemples 1 et 3. En outre, la rupture se produit en partie dans l'acier 316L alors que la configuration d'essai favorise une rupture à une interface ou dans le matériau intercalaire FeNiCoMo.

**Tableau 1 : Propriétés mécaniques des assemblages réalisés dans les exemples.**

| **Test** | **Traction** | **Résilience** | |
|---|---|---|---|
| Assemblage | Lieu de la rupture | Energie de rupture | Lieu de la rupture |
| Exemple 1 16MND5/IN690 | IN690 loin de l'interface ou IN690 carburé | 2-6J (KCU) | interface |
| Exemple 2 16MND5/Ni/IN690 | Rupture spontanée de l'assemblage lors du traitement thermique | | |
| Exemple 3 16MND5/Fe-42Ni/316LN | Dans Fe-42Ni | 63+/-4J (KCU) | Fe-42Ni et interface Fe-42Ni/316LN |
| Exemple 4 18MND5/FeNiCoMo/316L | Dans le 316L | 169J (KCV) | FeNiCoMo et 316L |

Les résultats des essais mécaniques regroupés dans le Tableau 1 indiquent clairement que l'utilisation d'un matériau intercalaire en FeNiCoMo permet non seulement de supprimer la fragilisation des matériaux par la diffusion du carbone mais aussi d'obtenir un assemblage plus résistant qu'avec les matériaux intercalaires représentatifs de l'art antérieur.

La comparaison des exemples montre que l'amélioration apportée par l'invention est essentiellement due à l'ajout de Mo dans le matériau intercalaire.

Cet ajout renforce le matériau intercalaire sans dégrader les interfaces (Figures 4A et 4B) ni les matériaux à assembler.

### RÉFÉRENCES

[1] L. Bedel, V. Rougier, L. Briottet, G. Delette, M. Ignat, "Interfacial diffusion and local mechanical properties in a bimetallic specimen", Phys. Mesomech., 7, No. 3-4 (2004) p 81.
[2] T. Enjo, K. Ikeuchi, S. Yoshizaki, "Diffusion bonding of carbon steel S45C to Austenitic stainless steel SUS304", Journal of high temperature society of Japan, 14(2) pp 55-65, 1988.
[3] B. Kurt "The interface morphology of diffusion bonded dissimilar stainless steel and medium carbon steel couples", Journal of Materials Processing Technology 190 (2007) pp 138-141.
[4] J. Besson, Y. Madi, A. Motarjemi, M. Koçak, G. Martin, P. Hornet "Crack initiation and propagation close to the interface in a ferrite-austenite joint", Materials science and engineering A397 (2005) pp 84-91
[5] R. Prader, B. Buchmayr, H. Cerjak, J. Peterselm, A. Fleming, "Microstructures and mechanical properties of graded composition joints between different heat resistant steels", Conférence PGM 94, Presses Polytechniques et Universitaires Romandes, pp 479-485 (1995).
[6] J.W. Dini, "Use of electrodeposition to provide coatings for solid state bonding", Welding Journal, Nov. 1982, pp 33-39.
[7] H.P. Buchkremer, P.J. Ennis, D. Stöver, "Manufacture and stress rupture properties of hipped austenitic ferritic transition joints", Journal of Materials Processing Technology 92-93 (1999) pp 368-370.
[8] R. J. Klassen, G.C. Weatherly, B. Ramaswami "Fracture mechanisms in constrained Ni interlayers", Materials science and engineering A161 (1993) pp 181-186.
[9] H.V. Atkinson, N.W. Crabbe, R. Walker, "HIP diffusion bonding of austenitic to ferritic steels", Conference Diffusion Bonding 2, Cranfield, UK, mars 1990, ed. Elsevier.

## Revendications

1. Procédé d'assemblage par soudage diffusion d'une pièce en acier à forte teneur en carbone et à faible teneur en éléments carburigènes avec une pièce en acier ou en alliage de nickel à faible teneur en carbone et à forte teneur en éléments carburigènes, chacune des pièces comprenant une surface à assembler, dans lequel on place un matériau intercalaire entre les surfaces à assembler, puis on réalise le soudage diffusion pour assembler les deux pièces, et on refroidit l'assemblage obtenu, **caractérisé en ce que** le matériau intercalaire est un alliage à matrice de nickel et éventuellement de fer et/ou de cobalt présentant une microstructure austénitique à la température de soudage diffusion et comprenant, outre des impuretés inévitables, les éléments suivants dans les teneurs suivantes exprimées en % massiques par rapport à la masse totale de l'alliage :
- Nickel (Ni) : 5 à 90, de préférence 35 à 75 ;
- Cobalt (Co) : 0 à 50, de préférence 0 à 20 ;
- Fer (Fe) : 0 à 93, de préférence 23 à 63 ;
- Molybdène : 4 à 16 ;
- Carbone : moins de 0,10, de préférence moins de 0,05 ;
- Chrome : Moins de 10, de préférence moins de 5, de préférence encore moins de 1 ;
- Eléments d'alliages habituellement utilisés dans les alliages austénitiques, pour chacun d'eux : moins de 2, de préférence moins de 1, de p-référence encore moins de 0,5.

2. Procédé selon la revendication 1, dans lequel l'alliage du matériau intercalaire comprend un ou plusieurs parmi les éléments d'alliages suivants habituellement utilisés dans les alliages austénitiques dans les teneurs suivantes, exprimées en % massiques par rapport à la masse totale de l'alliage :
- Manganèse (Mn) : moins de 2;
- Silicium (Si) : moins de 1;
- Calcium (Ca) : moins de 0,5, de préférence moins de 0,1 ;
- Aluminium (Al) : moins de 1, de préférence moins de 0,5.

3. Procédé selon l'une quelconque des revendications précédentes, dans lequel l'alliage du matériau intercalaire est constitué, en % massiques par rapport à la masse totale de l'alliage, de :
- Nickel : 35 à 55, par exemple 45,3;
- Cobalt : 0 à 18, par exemple 9,97;
- Molybdène : 4 à 8, par exemple 5,19 ;
- et le reste de fer et d'impuretés inévitables.

4. Procédé selon l'une quelconque des revendications précédentes, dans lequel le matériau intercalaire est placé entre les surfaces à assembler sous la forme d'une feuille ou d'une tôle, par exemple d'une épaisseur de 0,1 à 3 mm, ou encore d'une poudre, de préférence d'une couche de poudre, par exemple d'une épaisseur de 0,3 à 10 mm, de préférence de 1 mm à 5 mm.

5. Procédé selon l'une quelconque des revendications 1 à 3, dans lequel le matériau intercalaire est déposé sous la forme d'un revêtement, par exemple d'une épaisseur de 0,1 à 3 mm, sur au moins l'une des surfaces à assembler.

6. Procédé selon la revendication 5, dans lequel le matériau intercalaire est déposé par un procédé choisi parmi la projection thermique de poudre, la fusion de fil, le dépôt par voie chimique ou électrolytique, et le dépôt sous vide.

7. Procédé selon l'une quelconque des revendications précédentes, dans lequel l'acier à forte teneur en carbone et à faible teneur en éléments carburigènes comprend plus de 0,08% en masse de carbone et moins de 15% en masse d'éléments carburigènes, et l'acier ou l'alliage de nickel à faible teneur en carbone et à forte teneur en éléments carburigènes comprend 0,08% en masse ou moins de carbone et 15% en masse ou plus d'éléments carburigènes.

8. Procédé selon l'une quelconque des revendications précédentes, dans lequel les éléments carburigènes sont choisis parmi les éléments des colonnes IVB, VB et VIB de la classification périodique des éléments.

9. Procédé selon l'une quelconque des revendications précédentes, dans lequel l'acier à forte teneur en carbone et à faible teneur en éléments carburigènes est choisi dans la classe des aciers au carbone tels que les aciers de construction, ou dans la classe des aciers faiblement alliés tels que les aciers pour appareils à pression ou les aciers à outils ; et l'acier ou l'alliage de nickel à faible teneur en carbone et à forte teneur en éléments carburigènes est choisi parmi les aciers inoxydables tels que les aciers austénitiques de la série 300 et l'alliage 800, ou parmi les alliages de nickel.

10. Procédé selon l'une quelconque des revendications précédentes, dans lequel au moins une des pièces à assembler est sous forme de poudre.

11. Procédé selon l'une quelconque des revendications précédentes, dans lequel le soudage diffusion est réalisé par compression isostatique à chaud (CIC).

12. Procédé selon l'une quelconque des revendications 1 à 10, dans lequel le soudage diffusion est réalisé par compression uniaxiale.

13. Procédé selon l'une quelconque des revendications précédentes, dans lequel l'assemblage obtenu est soumis, en outre, à un ou plusieurs traitement(s) thermique(s).

14. Assemblage obtenu par le procédé selon l'une quelconque des revendications 1 à 13 ; ledit assemblage comprenant une pièce en acier à forte teneur en carbone et à faible teneur en éléments carburigènes, et une pièce en acier ou en alliage de nickel à faible teneur en carbone et à forte teneur en éléments carburigènes soudées ensemble par diffusion à l'aide d'un matériau intercalaire.

## Patentansprüche

1. Verfahren zum Verbinden eines Teils aus Stahl mit hohem Kohlenstoffgehalt und niedrigem Gehalt an karbidbildenden Elementen mit einem Teil aus Stahl oder aus Nickellegierung mit niedrigem Kohlenstoffgehalt und hohem Gehalt an karbidbildenden Elementen, wobei jedes der Teile eine Fügefläche umfasst, bei dem man zwischen den Fügeflächen ein Interkalationsmaterial anbringt, dann das Diffusionsschweißen durchführt, um die beiden Teile zusammenzufügen, und man den hergestellten Verbund abkühlt,
**dadurch gekennzeichnet, dass** das Interkalationsmaterial eine Legierung mit einer Matrix aus Nickel und eventuell Eisen und/oder Cobalt ist, die bei der Diffusionsschweißtemperatur eine austenitische Mikrostruktur aufweist und, außer unvermeidlichen Verunreinigungen, die folgenden Elemente mit den folgenden Gehalten, ausgedrückt in Massen%, bezogen auf die Gesamtmasse der Legierung, umfasst:
- Nickel (Ni) : 5 bis 90, vorzugsweise 35 bis 75 ;
- Cobalt (Co) : 0 bis 50, vorzugsweise 0 bis 20 ;
- Eisen (Fe) : 0 bis 93, vorzugsweise 23 bis 63 ;
- Molybdän : 4 bis 16 ;
- Kohlenstoff: weniger als 0,10, vorzugsweise weniger als 0,05 ;
- Chrom : weniger als 10, vorzugsweise weniger als 5 ; noch bevorzugter weniger als 1 ;
- Legierungselemente, die üblicherweise bei den austenitischen Legierungen verwendet werden, für jedes von ihnen : weniger als 2, vorzugsweise weniger als 1, noch bevorzugter weniger als 0,5.

2. Verfahren nach Anspruch 1, bei dem die Legierung des Interkalationsmaterials eines oder mehrere der folgenden üblicherweise bei den austenitischen Legierungen mit den folgenden Gehalten verwendeten Elemente umfasst, ausgedrückt in Massen% in Bezug auf die Gesamtmasse der Legierung :
- Mangan (Mn) : weniger als 2 ;
- Silicium (Si) : weniger als 1 ;
- Calcium (Ca) : weniger als 0,5, vorzugsweise weniger als 0,1 ;
- Aluminium (Al) : weniger als 1, vorzugsweise weniger als 0,5.

3. Verfahren nach einem der vorhergehenden Ansprüche, bei dem die Legierung des Interkalationsmaterials in Massen%, bezogen auf die Gesamtmasse der Legierung, besteht aus :
- Nickel : 35 bis 55, zum Beispiel 45,3 ;
- Cobalt : 0 bis 18, zum Beispiel 9,97 ;
- Molybdän : 4 bis 8, zum Beispiel 5,19 ;
- und der Rest durch Eisen und unvermeidliche Verunreinigungen.

4. Verfahren nach einem der vorhergehenden Ansprüche, bei dem das Interkalationsmaterial in Form einer Folie oder eines Blechs mit zum Beispiel einer Dicke von 0,1 bis 3 mm, oder auch eines Pulvers, vorzugsweise einer Pulverschicht mit zum Beispiel einer Dicke von 0,3 bis 10 mm, vorzugsweise von 1 bis 5 mm, sich zwischen den Fügeflächen befindet.

5. Verfahren nach einem der Ansprüche 1 bis 3, bei dem das Interkalationsmaterial in Form eines Überzugs, zum Beispiel mit einer Dicke von 0,1 bis 3 mm, auf wenigstens eine der zusammenzufügenden Flächen aufgebracht wird.

6. Verfahren nach Anspruch 5, bei dem das Interkalationsmaterial durch ein Verfahren abgeschieden wird, das ausgewählt wird unter dem thermischen Spritzen von Pulver, dem Abscheiden auf chemischem oder elektrolytischem Wege und der Vakuumabscheidung.

7. Verfahren nach einem der vorhergehenden Ansprüche, bei dem der Stahl mit hohem Kohlenstoffgehalt und mit niedrigem Gehalt an karbidbildenden Elementen mehr als 0,08 Massen% Kohlenstoff und weniger als 15 Massen% karbidbildende Elemente umfasst, und der Stahl oder die Nickellegierung mit niedrigem Kohlenstoffgehalt und mit hohem Gehalt an karbidbildenden Elementen 0,08 Massen% oder weniger Kohlenstoff und 15 Massen% oder mehr karbidbildende Elemente umfasst.

8. Verfahren nach einem der vorhergehenden Ansprüche, bei dem die karbidbildenden Elemente ausgewählt werden unter den Elementen der Spalten IVB, VB und VIB des Periodensystems der Elemente.

9. Verfahren nach einem der vorhergehenden Ansprüche, bei dem der Stahl mit hohem Kohlenstoffgehalt und niedrigem Gehalt an karbidbildenden Elementen ausgewählt wird aus der Klasse der Kohlenstoffstähle wie etwa den Baustählen, oder aus der Klasse der schwach legierten Stähle wie etwa den Stählen für Druckbehälter oder den Werkzeugstählen ; und der Stahl oder die Nickellegierung mit niedrigem Kohlenstoffgehalt und hohem Gehalt an karbidbildenden Elementen ausgewählt wird unter den nichtrostenden Stählen wie etwa den austenitischen Stählen der Serie 300 und der Legierung 800, oder unter den Nickellegierungen.

10. Verfahren nach einem der vorhergehenden Ansprüche, bei dem wenigstens eines der zu verbindenden Teile pulverförmig ist.

11. Verfahren nach einem der vorhergehenden Ansprüche, bei dem das Diffusionsschweißen durch heißisostatisches Pressen (HIP) realisiert wird.

12. Verfahren nach einem der Ansprüche 1 bis 10, bei dem das Diffusionsschweißen durch uniaxiales Pressen realisiert wird.

13. Verfahren nach einem der vorhergehenden Ansprüche, bei dem der hergestellte Verbund außerdem einer (oder mehreren) Wärmebehandlung(en) unterzogen wird.

14. Verbund, hergestellt gemäß dem Verfahren nach einem der Ansprüche 1 bis 13 ; wobei der genannte Verbund ein Teil aus Stahl mit hohem Kohlenstoffgehalt und niedrigem Gehalt an karbidbildenden Elementen und ein Teil aus Stahl oder aus Nickellegierung mit niedrigem Kohlenstoffgehalt und hohem Gehalt an karbidbildenden Elementen umfasst, zusammengeschweißt mit Hilfe eines Interkalationsmaterials.

## Claims

1. Process for joining by diffusion welding a part made of steel having a high carbon content and a low carbide-forming elements content with a part made of steel or of nickel alloy having a low carbon content and a high carbide-forming elements content, each of the parts comprising a surface to be joined, in which process an intermediate material is placed between the surfaces to be joined, then diffusion welding is carried out to join the two parts, and the assembly obtained is cooled, **characterised in that** the intermediate material is an alloy with a matrix made of nickel and optionally of iron and/or cobalt, having an austenitic micro-structure at the diffusion welding temperature, and comprising, apart from unavoidable impurities, the following elements with the following contents, expressed as % by mass relative to the total mass of the alloy:
- Nickel (Ni): 5 to 90, preferably 35 to 75;
- Cobalt (Co): 0 to 50, preferably 0 to 20;
- Iron (Fe): 0 to 93, preferably 23 to 63;
- Molybdenum: 4 to 16;
- Carbon: less than 0.10, preferably less than 0.05;
- Chromium: less than 10, preferably less than 5, more preferably less than 1;
- Alloy elements commonly used in austenitic alloys, for each of them: less than 2, preferably less than 1, more preferably less than 0.5.

2. Process according to claim 1 wherein the alloy of the intermediate material comprises one or more among the following alloy elements commonly used in austenitic alloys with the following contents, expressed as % by mass relative to the total mass of the alloy:
- Manganese (Mn): less than 2;
- Silicon (Si): less than 1;
- Calcium (Ca): less than 0.5, preferably less than 0.1;
- Aluminium (Al): less than 1, preferably less than 0.5.

3. Process according to any one of the preceding claims, wherein the alloy of the intermediate material consists of, as % by mass relative to the total mass of the alloy, of:
- Nickel: 35 to 55, for example 45.3;
- Cobalt: 0 to 18, for example 9.97;
- Molybdenum: 4 to 8, for example 5.19;
- and the remainder being iron and unavoidable impurities.

4. Process according to any one of the preceding claims, wherein the intermediate material is placed between the surfaces to be assembled in the form of a sheet or of a plate, for example with a thickness of 0.1 to 3mm, or in the form of a powder, preferably of a layer of powder, for example with a thickness of from 0.3 to 10 mm, preferably from 1 mm to 5 mm.

5. Process according to any one of claims 1 to 3, wherein the intermediate material is deposited in the form of a coating, for example with a thickness of 0.1 to 3 mm, on at least one of the surfaces to be assembled.

6. Process according to claim 5 wherein the intermediate material is deposited by a process chosen from thermal spray-coating of powders, wire melting, chemical or electrolytic deposition and vacuum deposition.

7. Process according to any one of the preceding claims wherein the steel having a high carbon content and a low carbide-forming elements content comprises more than 0.08% by mass of carbon and less than 15% by mass of carbide-forming elements, and the steel or nickel alloy having a low carbon content and high carbide-forming elements content comprises 0.08% by mass or less of carbon and 15% by mass or more of carbide-forming elements.

8. Process according to any one of the preceding claims wherein the carbide-forming elements are chosen from the elements of columns IVB, VB and VIB of the periodic table of the elements.

9. Process according to any one of the preceding claims wherein the steel having a high carbon content and low carbide-forming elements content is chosen from carbon steels grades such as engineering steels, or from low alloyed steels grades such as steels for pressure equipment or tool steels; and the steel or nickel alloy having a low carbon content and a high carbide-forming elements content is chosen from stainless steels such as 300-series austenitic stainless steels and alloy 800, or from nickel alloys.

10. Process according to any one of the preceding claims, wherein at least one of the two parts to be assembled is in the form of a powder.

11. Process according to any one of the preceding claims, wherein the diffusion welding is carried out by Hot Isostatic Pressing (HIP).

12. Process according to any one of claims 1 to 10, wherein the diffusion welding is carried out by uniaxial compression.

13. Process according to any one of the preceding claims, wherein the assembly obtained is further subjected to one or more heat treatment(s).

14. Assembly obtained by the process according to any one of the claims 1 to 13, said assembly comprising a part made of steel having a high carbon content and a low carbide-forming elements content, and a part made of steel or of nickel alloy having a low carbon content and a high carbide-forming elements content welded together by diffusion by means of an intermediate material.
